# EUROPEAN PATENT SPECIFICATION

(11) **EP 2 421 231 B1**
(45) Date of publication and mention of the grant of the patent: **24.07.2013**
(21) Application number: 11177644.9
(22) Date of filing: 16.08.2011
(51) Int. Cl.: G06F 1/16, H04M 1/02

(54) **Mobile electronic device**
Mobile elektronische Vorrichtung
Dispositif électronique mobile

(30) Priority: 17.08.2010 KR 20100079383
(43) Date of publication of application: 22.02.2012
(73) Proprietor: Pantech Co., Ltd, Mapo-gu, Seoul 121-270 (KR)
(72) Inventor: Song, Chang Jin, 121-792 Seoul (KR)
(74) Representative: Herzog, Markus

(56) References cited:
- EP-A1- 1 603 309
- KR-A- 20080 035 709

## Description

### BACKGROUND

FIELD

The present invention relates to a mobile electronic device according to the preamble part of claim 1.

DISCUSSION OF THE BACKGROUND

In recent years, as a demand for greater mobility increases, a variety of portable mobile devices, exemplified by, for example, a mobile phone, an MP3 player, a portable media player (PMP), or the like, have been developed. EP-A1-1 603 309 discloses a foldable electronic equipment comprising a first part and a second part interconnected through a Kinge with at least one leaf spring. The second part is provided with a display. Users of these devices, however, may prefer wider display screens.

Although a wider display screen is desired, the overall size of an end product still needs to be compact in order to maintain the portability of a mobile device. In addition, reliability is also required to prevent an image on a display from being distorted. Display life of the display screen may also be a critical issue.

### SUMMARY

It is an object of the present invention to provide a mobile electronic device having a hinge portion to provide a display size while maintaining portability of the product. This object is achieved by the mobile electronic device having the features of claim 1. Preferred embodiments of the mobile electronic device are defined in subclaims 2 to 11.

It is to be understood that both the foregoing general description and the following detailed description are exemplary and explanatory and are intended to provide further explanation of the invention as claimed. Other features and aspects will be apparent from the following detailed description, the drawings, and the claims.

### BRIEF DESCRIPTION OF THE DRAWINGS

The accompanying drawings, which are included to provide a further understanding of the invention and are incorporated in and constitute a part of this specification, illustrate embodiments of the invention, and together with the description serve to explain the principles of the invention.

FIG. 1 is a perspective view illustrating a mobile device according to an exemplary embodiment.

FIG. 2 is a cross-sectional view of the mobile device in a closed state according to an exemplary embodiment.

FIG. 3 is a perspective view of the mobile device in an open state according to an exemplary embodiment.

FIG. 4 is a cross-sectional view of the mobile device in an open state according to an exemplary embodiment.

FIG. 5 is a perspective view of the hinge of the mobile device according to an exemplary embodiment.

FIG. 6 is a perspective view of the hinge of the mobile device according to an exemplary embodiment.

FIG. 7 is perspective view of a portion of the mobile device according to an exemplary embodiment.

FIG. 8 is a cross-sectional view of a portion of the mobile device according to an exemplary embodiment.

FIG. 9A, FIG. 10A, FIG. 11A, FIG. 12A, and FIG. 13A are cross-sectional views illustrating a transition of a hinge portion from a folded state to an unfolded state according to an exemplary embodiment. FIG. 9B, FIG. 10B, FIG. 11B, FIG. 12B, and FIG. 13B are perspective views illustrating a transition of a hinge portion from a folded state to an unfolded state according to an exemplary embodiment.

### DETAILED DESCRIPTION OF THE ILLUSTRATED EMBODIMENTS

The invention is described more fully hereinafter with references to the accompanying drawings, in which exemplary embodiments of the invention are shown. This invention may, however, be embodied in many different forms and should not be construed as limited to the embodiments set forth herein. Rather, these exemplary embodiments are provided so that this disclosure is thorough, and will fully convey the scope of the invention to those skilled in the art. It will be understood that when an element is referred to as being "on" or "connected to" or "coupled to" another element, it can be directly on, directly connected to, or directly coupled to the other element, or intervening elements may be present. In contrast, if an element is referred to as being "directly on" or "directly connected to" or "directly coupled to" another element, no intervening elements are present. Throughout the drawings and the detailed description, unless otherwise described, the same drawing reference numerals are understood to refer to the same elements, features, and structures. The relative size and depiction of these elements may be exaggerated for clarity, illustration, and convenience.

Hereinafter, a configuration of the mobile device according to an embodiment of the present invention will be described.

In the context of this disclosure, one of ordinary skill in the art will understand that "wrapping" a display does not involve folding a display with sharp angles. One of ordinary skill in the art will understand that "wrapping" refers to locating a sheet or device significantly around the contours of a curved surface.

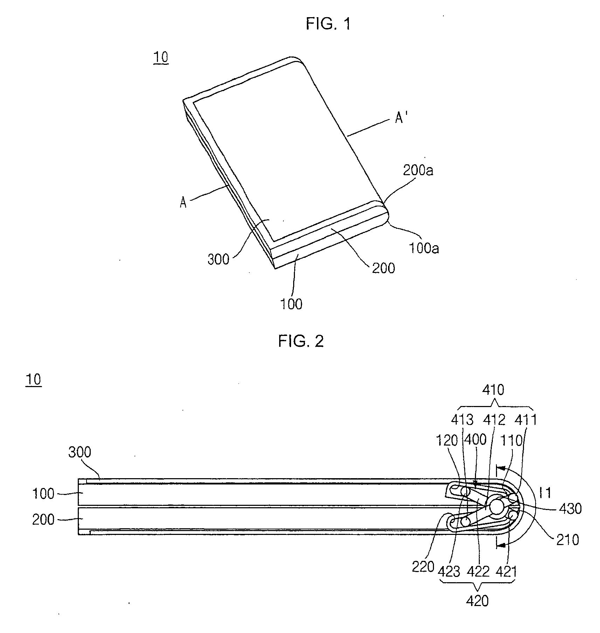

FIG. 1 is a perspective view illustrating a mobile device according to an exemplary embodiment. FIG. 2 is a cross-sectional view of the mobile device in a closed state according to an exemplary embodiment.

Referring to FIG. 1 and FIG. 2, the mobile device 10 includes a first case 100, a second case 200, a display portion 300 corresponding to the first case 100 and the second case 200, and a hinge portion 400 located between the first case 100 and the second case 200.

The first case 100 may construct a bar type mobile device together with the second case 200. The first case 100 may have a shape of a substantially rectangular plane. The first case 100 may incorporate a driving circuit or operation circuit for driving the display portion 300.

The first case 100 may have a curved surface at an end closer to an end of the second case 200 in an open position. The curved surface 100a of the first case 100 has a substantially quadrant section. Thus, the display portion 300 arranged along the curved surface 100a of the first case 100 may not be required to be folded.

In addition, the first case 100 includes a fixing groove 110 and a slot 120 formed lengthwise, both of which allow the first case 100 to be coupled to the hinge portion 400. In addition, the first case 100 may be coupled with the second case 200 by the hinge portion 400.

In an exemplary embodiment, the second case 200 may be coupled to a lower portion of the first case 100. The second case 200 may also have a shape of a substantially rectangular plane. The second case 200 may also incorporate an operation circuit or driving circuit for performing signal processing.

The second case 100 may have a curved surface 200a corresponding to the curved surface 100a at one surface contiguous to the first case 100. The curved surface 200a of the second case 200 if located opposite to the curved surface 100a of the first case 100, forms a substantially semicircular section. In such a manner, the display portion 300 may be located along the curved surfaces 100a and 200a of the first case 100 and the second case 200. Thus, because of the circular formation along the external face of the first case 100 and the second case 200, the display portion 300 can be wrapped around external surfaces of the first case 100 and the second case 200 without being required to be folded.

In addition, the second case 200 is may be held at a closed state and is the second case is disposed opposite of the first case 100. However, the second case 200 rotates around an area where the curved surface 200a is formed, and results in a position in which a surface not adjacent to the first case 100 during a closed state, of the second case 200 becomes level with a surface of the first case 100 not adjacent to the second case. Thus, the second case 200 may be level with the first case 100, thereby allowing the display portion 300 to secure a display area.

Further, the second case 200 includes a fixing groove 210 and a slot 220 formed lengthwise, both of which allow the second case 200 to be coupled to the hinge portion 400. Thus, the second case 200 may swing from a closed position to an open position relative to the first case 100, while the hinge portion 400 moves.

The display portion 300 may have the capability to be wrapped around the first case 100 and the second case 200. Specifically, the display portion 300 may have the capability to be wrapped around the non-adjacent surface during a closed state of the device of the first case 100, the curved surfaces 100a and 200a of the first case 100 and the second case 200, and non-adjacent surface during a closed state of the device of the second case 200. Therefore, if the second case 200 rotates so that the curved surface 200a is level with the first case 100, the display portion 300 may provide a substantially planar surface on a level with significantly few uneven parts on its surface. In this case, the display portion 300 may have a substantially level surface without a protruding part throughout the surfaces of the first case 100 and the second case 200 facilitated by the hinge portion 400. This functionality provides a stability while using the device, and improves the reliability and life characteristics by avoiding folded portions from the display portion 300.

If the second case 200 is opened, the display portion 300 provides for a display area corresponding to a sum of the area of the first case 100 and the area of the second case 200. Therefore, the display portion 300 allows the user to control the mobile device 10.

The display portion 300 may include an organic light emitting display (OLED) known as a flexible display, or a flexible liquid crystal display (LCD), but aspects of the present invention are not limited thereto.

The hinge portion 400 is arranged at an area where the first case 100 and the second case 200 are coupled with each other. If the second case 200 is rotated from the lower portion to the side portion (the portion with curved surface 100a) of the first case 100, the hinge portion 400 allows the second case 200 to be separated from the side portion of the first case 100. In addition, a distance between the curved surfaces 100a and 200a separated from each other by the hinge portion 400 is equal to a sum of perimeter lengths of the curved surfaces 100a and 200a of the first case 100 and the second case 200. Therefore, the display portion 300 arranged along external surfaces of the first case 100 and the second case 200 may be level with the first case 100 and the second case 200 even if the second case 200 rotates to be significantly planar with the first case 100 in the open position.

Referring to Fig. 2, if the second case 200 is in the closed position along with the first case 100, the hinge portion 400 is positioned between outer edges of the first case 100 and the second case 200 while coupling the first case 100 and the second case 200 to each other. The hinge portion 400 may include a first link 410 and a second link 420. In addition, the hinge portion 400 may further include a click hinge 430 at an intersection of the first link 410 and second link 420.

The first link 410 includes a fixing portion 411 positioned in the fixing groove 110 of the first case 100, an extending portion 412 extending from the fixing portion 411, and a moving portion 413 connected to the extending portion 412 and positioned in the slot 220 of the second case 200. The fixing portion 411 is position-fixed inside the first case 100. However, if the hinge portion 400 rotates, the fixing portion 411 rotates within the first case 100 and maintains the rotation of the hinge portion 400. The moving portion 412 connects the fixing portion 411 and the extending portion 413 to each other. The extending portion 412 keeps the fixing portion 411 and the moving portion 413 at a constant distance. Therefore, if the hinge portion 400 rotates, the moving portion 413 is able to move its position along the slot 220 of the second case 200.

The second link 420 intersects the first link 410. The second link 420 is connected to the first link 410 about an intersecting axis. If the second case 200 rotates, the first link 410 and the second link 420 may move while remaining linked with each other, thereby allowing the first case 100 and the second case 200 to rotate relative to each other.

The second link 420 includes a fixing portion 421 that fits into in the fixing groove 210 of the second case 200, an extending portion 422 extending from the fixing portion 421, and a moving portion 423 connected to the extending portion 422 and that fits into the slot 120 of the first case 100. The fixing portion 421 is placed inside the second case 200. However, if the hinge portion 400 rotates, the fixing portion 421 rotates within the second case 200 and maintains rotation of the hinge portion 400. The extending portion 422 keeps the fixing portion 421 and the extending portion 423 at a constant distance, so that if the hinge portion 400 rotates, the moving portion 423 is able to move its position within and guided by the slot 120 of the first case 100.

The click hinge 430 is formed at the intersecting axis of the first link 410 and the second link 420. The click hinge 430 may provide for a semi-automatic operation as the first link 410 and the second link 420 move. Thus, if the second case 200 rotates, and if an angle formed by the first link 410 and the second link 420 exceeds a preset angle, the click hinge 430 may apply a force to the first link 410 and the second link 420 until the angle formed by the first link 410 and the second link 420 becomes approximately 180 degrees. In addition, if the second case 200 is rotated back into the direction of a closed state, and if the angle formed by the first link 410 and the second link 420 falls under the preset angle, the click hinge 430 may apply a force to the first link 410 and the second link 420 until the first link 410 and the second link 420 form a minimum angle, thereby allowing the second case 200 to be positioned in the closed state with the first case 100.

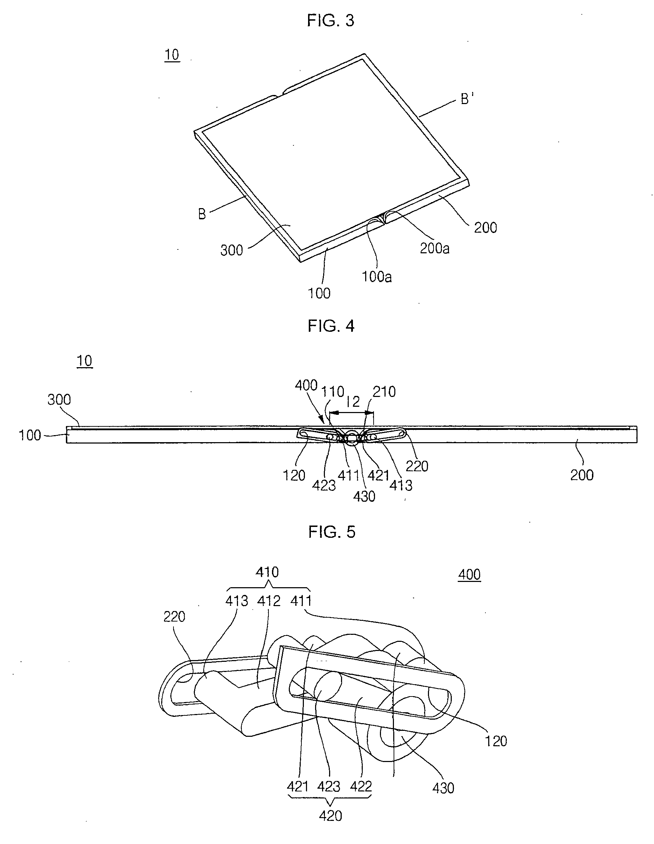

FIG. 3 is a perspective view of the mobile device in an open state according to an exemplary embodiment. FIG. 4 is a cross-sectional view of the mobile device in an open state according to an exemplary embodiment.

Referring to FIG. 3 and FIG. 4, the second case 200 rotating to the open state is shown, thus allowing the second case 200 to be substantially level with the first case 100.

The first link 410 of the hinge portion 400 rotates in a state while the fixing portion 411 is positioned in the fixing groove 110 of the first case 100, so that the extending portion 412 is positioned substantially in parallel with the first case 100. In addition, the moving portion 413 of the first link 410 moves along the slot 220 (from a first end to a second end) of the second case 200, thus being positioned closer to the end of the second case 200.

In addition, the second link 420 rotates in a state in which the fixing portion 421 is positioned in the fixing groove 210 of the second case 200, so that the connecting portion 422 is positioned substantially in parallel with the second case 200. In addition, the moving portion 423 of the second link 420 moves along the slot 120 (from a first end to a second end) of the first case 100, thus being positioned closer to the end of the first case 100.

The hinge portion 400 allows the first case 100 and the second case 200 to separate from each other during a rotation to the open state. In this case, a distance I2 of eccentricity between the curved surfaces 100a and 200a is equal to or at least the combined perimeter lengths I1 of the curved surfaces 100a and 200a. Therefore, at least due to the length I2, the display portion 300 formed along the external surfaces of the first case 100 and the second case 200 may have a planar surface that is substantially level without an upwardly protruding portion in the open state.

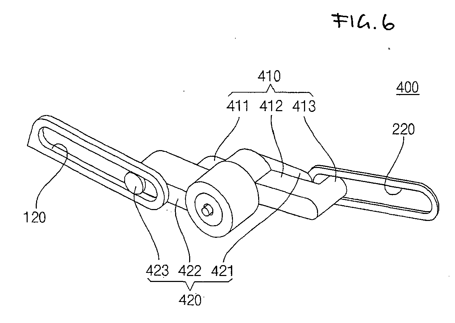

FIG. 5 is a perspective view of the hinge of the mobile device according to an exemplary embodiment. FIG. 6 is a perspective view of the hinge of the mobile device according to an exemplary embodiment.

Referring to FIG. 5, the mobile device 10 according to is in the closed state.

The first link 410 is positioned such that the moving portion 413 is directed towards the first case 100, along the slot 220 of the second case 200 by the extending portion 412 in a state in which the fixing portion 411 is fixed in the fixing groove 110 of the first case 100. Likewise, the second link 420 is positioned such that the moving portion 423 is directed towards the second case 200 along the slot 120 of the first case 100 by the extending portion 422 in a state in which the fixing portion 421 is fixed in the fixing groove 210 of the second case 200. The display portion 300 is formed to be wrapped around the curved surfaces 100a and 200a, so that it has a length equal to the combined perimeter lengths I1 of the curved surfaces 100a and 200a.

Referring to FIG. 6, the mobile device 10 is in the open state, as opposed to the closed state shown in FIG. 5.

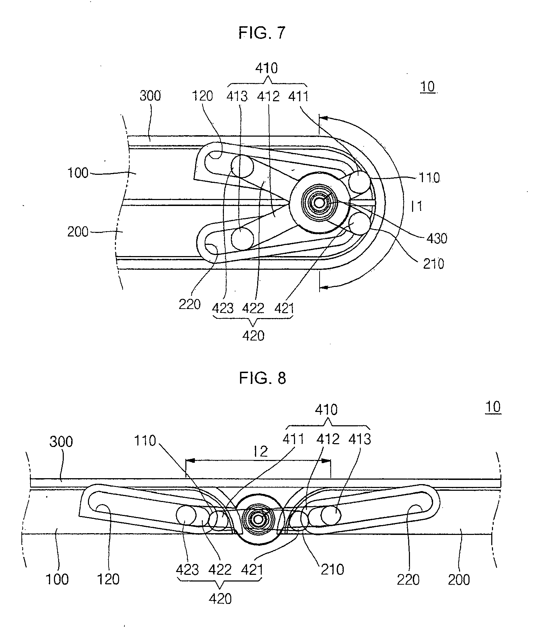

FIG. 7 is perspective view of a portion of the mobile device according to an exemplary embodiment.

FIG. 8 is a cross-sectional view of a portion of the mobile device according to an exemplary embodiment.

Referring to FIG. 7, the mobile device is in the closed state. Here, the first link 410 is positioned such that the moving portion 413 is directed toward the end of the second case 200 along the slot 220 of the second case 200 by the extending portion 412 in a state in which the fixing portion 411 is fixed in the fixing groove 110 of the first case 100. Likewise, the second link 420 is positioned such that the moving portion 423 is directed toward the end of the first case 100 along the slot 120 of the first case 100 by the extending portion 422 in a state in which the fixing portion 421 is fixed in the fixing groove 210 of the second case 200.

Therefore, since the display portion 300 may have a height equal to a sum of thicknesses of the first case 100 and the second case 200, it is positioned to be higher than the curved surfaces 100a and 200a at a location corresponding to the curved surfaces 100a and 200a.

Additionally, as described above, since a distance I2 of eccentricity between the curved surfaces 100a and 200a is equal to a sum of perimeter lengths of the curved surfaces 100a and 200a, the display portion 300 will have no protruding portions on the curved surfaces 100a and 200b. Therefore, the display portion 300 may have a significantly planar surface.

Referring to FIG. 8, the same portion as shown in FIG. 7 is now shown in an open state of the mobile device 10.

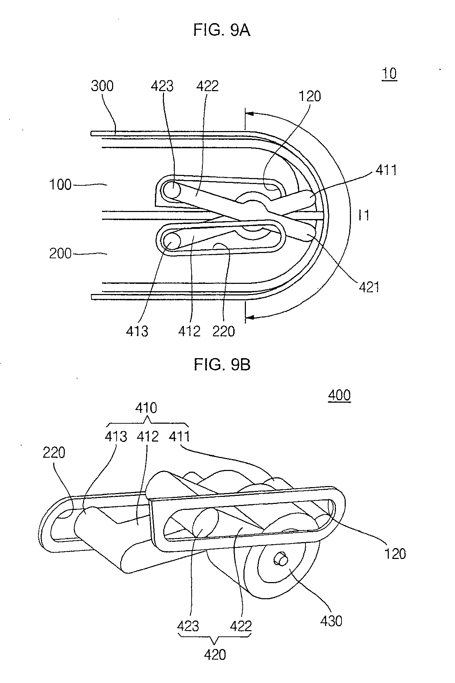

FIG. 9A, FIG. 10A, FIG. 11A, FIG. 12A, and FIG. 13A are cross-sectional views illustrating a transition of a hinge portion from a folded state to an unfolded state according to an exemplary embodiment. FIG. 9B, FIG. 10B, FIG. 11B, FIG. 12B, and FIG. 13B are perspective views illustrating a transition of a hinge portion from a folded state to an unfolded state according to an exemplary embodiment.

Referring first to FIG. 9A and FIG. 9B, when the mobile device 100 is in a closed state, the first link 410 has a fixing portion 411 fixed to the first case 100 and the moving portion 413 positioned inside the first link 410 along the slot 220 of the second case 200. In addition, the second link 420 has a fixing portion 421 fixed to the second case 200 and the moving portion 423 positioned inside the second link 420 along the slot 120 of the first case 100.

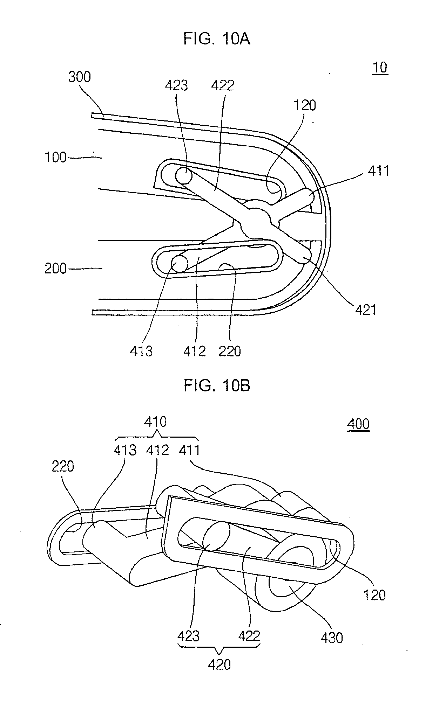

Next, referring to FIG. 10A and FIG. 10B, in a state where the mobile device 100 is opening, the first link 410 and the second link 420 are linked with each other around the click hinge 430 to be moved, where the movement may be caused by rotational forces. If a rotational force is applied around fixing portions 411 and 421 of the first link 410 and the second link 420, the moving portions 413 and 423 start to linearly move along the slots 120 and 220 through the connecting portions 412 and 422, respectively. Therefore, the moving portions 413 and 423 of the first link 410 and the second link 420 start to move toward ends of the first and second cases 100 and 200.

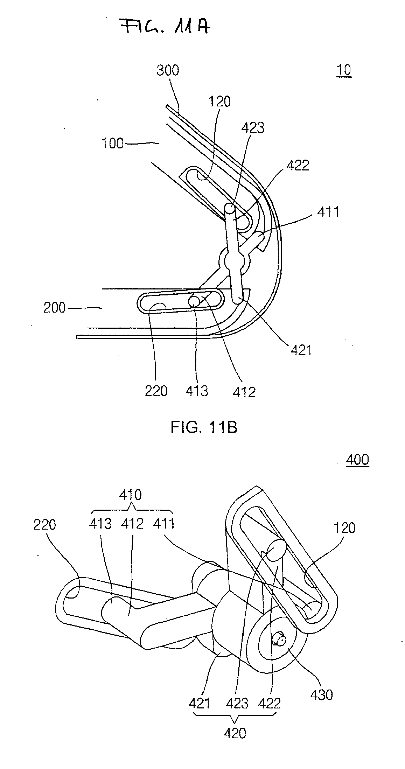

Referring to FIG. 11A and FIG. 11B, if the mobile device 100 is further opened, the moving portions 413 and 423 move toward the ends of the first case 100 and the second case 200 along the slots 120 and 220 due to the fixing portions 411 and 421 Pivoting the respective attached cases.

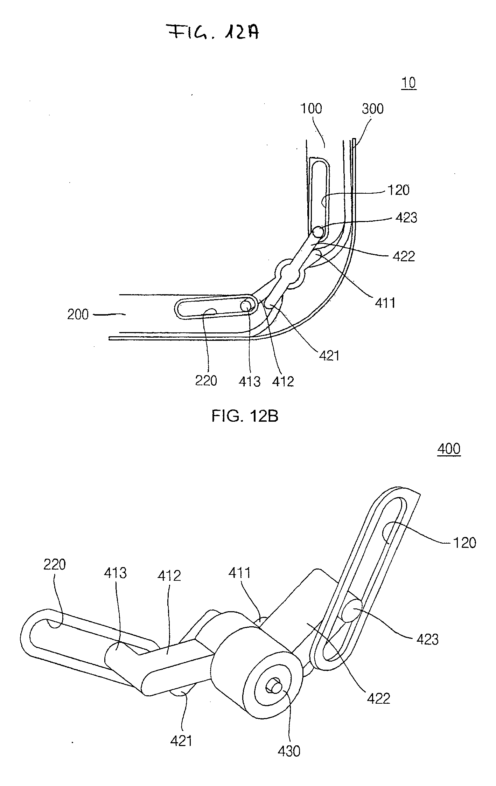

Referring to FIG. 12A and FIG. 12B, if the mobile device 100 is opened by approximately 90 degrees, the moving portions 413 and 423 of the first link 410 and the second link 420 are positioned at the ends of the first and second cases 100 and 200 along the slots 120 and 220. In addition, the click hinge 430 operates in a case where the mobile device 100 is opened by, for example, approximately 90 degrees, causing the moving portions 413 and 423 of the first link 410 and the second link 420 to move toward the ends of the first case 100 and the second case 200. Eventually, as the moving portions 413 and 423 move, a force is applied to the first case 100 and the second case 200 having the slots 120 and 220, so that the first case 100 and the second case 200 move in a horizontal direction.

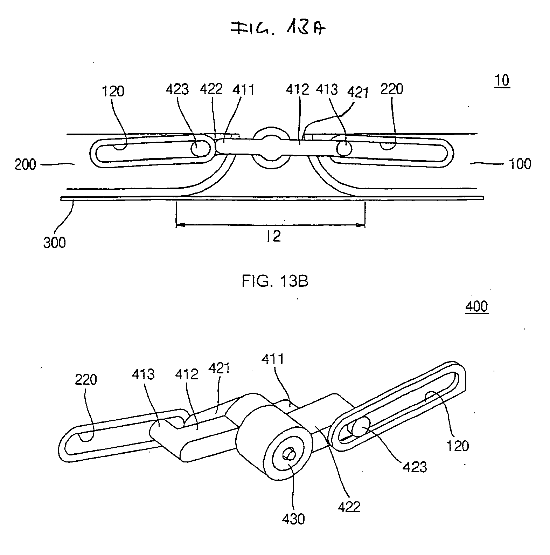

Referring to FIG. 13A and FIG. 13B, if the mobile device 100 is opened by approximately 180 degrees, the moving portions 413 and 423 of the first link 410 and the second link 420 are positioned at the significantly at the ends of the slots 120 and 220. Accordingly, the second case 200 is substantially level with the first case 100. In addition, the display portion 300 formed on each of outer peripheries of the first case 100 and the second case 200 is separated from the curved surfaces 100a and 200a. In addition, as described above, the distance I2 of eccentricity between the curved surfaces 100a and 200b is equal to the sum I1 of the perimeter lengths of the curved surfaces 100a and 200a. In such a manner, the display portion 300 may have a planar surface on a level even if the second case 200 moves. Consequently, if the second case 200 may be extended away from the first case 100 by the user to spread out the display portion 300, thus allowing the display portion 300 to form a substantially planar surface. Therefore, the user is allowed to stably manipulate the display portion 300. In addition, the display portion 300 may offer an undistorted image without an uneven surface to the user.

It will be apparent to those skilled in the art that various modifications and variations can be made in the present invention without departing from the scope of the invention. Thus, it is intended that the present invention cover the modifications and variations of this invention provided they come within the scope of the appended claims and their equivalents.
A mobile device is includes a first case; a second case performing a swing motion about its end contiguous to the first case; a display portion formed to be wrapped around the end along external surfaces of the first case and the second case; and a hinge portion coupled to ends of the first case and the second case, wherein the hinge portion includes a first link having one end fixed to the interior of the first case and the other end coupled to a slot of the second case, and a second link having one end fixed to the interior of the second case and the other end coupled to a slot of the first case.

## Claims

1. A mobile electronic device (10), comprising:
a first case (100) comprising a slot (120), a first end, and a second end; and
a second case (200) comprising a slot (220), a first end, and a second end,
wherein the second case (200) is adapted to rotate from a first state to a second state,
the first state being defined as a state in which the respective first ends and second ends of the first case (100) and the second case (200) are substantially adjacent to each other,
the second state being defined as a state in which the respective second ends of the first case (100) and the second case (200) are substantially adjacent to each other, and the respective first ends of the first case (100) and the second case (200) extend away from each other;
**characterized in that** the mobile electronic device further comprises:
a display portion (300) wrapped around an external surface of the first case (100) and the second case (200); and
a hinge portion (400) coupled to the second end of the first case (100) and the second end of the second case (200), the hinge portion (400) comprising:
a first link (410) and a second link (420),
the first link (410) including a fixing portion (411) positioned in a fixing groove (110) of the first case (100), an extending portion (412) extending from the fixing portion (411), and a moving portion (413) connected to the extending portion (412) and positioned in the slot (220) of the second case (200),
the fixing portion (411) being position-fixed inside the first case (100), while being rotatable within the first case (100), if the hinge portion (400) rotates, thus maintaining the rotation of the hinge portion (400), and the extending portion (412) connecting the fixing portion (411) and the moving portion (413) to each other, while keeping the fixing portion (411) and the moving portion (413) at a constant distance, such that, if the hinge portion (400) rotates, the moving portion (413) is able to move its position along the slot (220) of the second case (200),
the second link (420) including a fixing portion (421) positioned in a fixing groove (210) of the second case (200), an extending portion (422) extending from the fixing portion (421), and a moving portion (423) connected to the extending portion (422) and positioned in the slot (120) of the first case (100), the fixing portion (421) being placed inside the second case (200), while being rotatable within the second case (200), if the hinge portion (400) rotates, thus maintaining the rotation of the hinge portion (400), and the extending portion (422) keeping the fixing portion (421) and the moving portion (423) at a constant distance, such that, if the hinge portion (400) rotates, the moving portion (423) is able to move its position within and guided by the slot (120) of the first case (100),
the first link (410) and the second link (420) are coupled at an intersecting axis substantially perpendicular to the slots (120, 220) of the first case (100) and the second case (200),
the second link (420) being connected to the first link (410) about the intersecting axis, such that the first link (410) and the second link (420) may move while remaining linked with each other, thereby allowing the first case (100) and the second case (200) to rotate relative to each other.

2. The mobile device of claim 1, wherein the hinge portion comprises a click hinge.

3. The mobile device of claim 1 or 2, wherein the respective second ends of the first case and the second case each have a quadrant-shaped curved surface.

4. The mobile device of claim 3, wherein a sum of perimeter lengths of the curved surfaces of the first case and the second case at the first state is substantially equal to a distance of eccentricity between the curved surfaces of the first case and the second case at the second state.

5. The mobile device of claim 3 or 4, wherein the display portion contacts the curved surfaces of the first and second case at the first state, and is level with the curved surfaces at the second state.

6. The mobile device of any of claims 1 to 5, wherein the first link and the second link are coupled to each other at an intersection area of the respective extending portions.

7. The mobile device of any of claims 1 to 6, wherein the slots of the first case and the second case are the same length.

8. The mobile device of any of claims 1 to 7, wherein the display portion is coplanar with one surface of each of the first case and the second case at the second state.

9. The mobile device of any of claims 1 to 8, wherein the first state corresponds to a closed state of the Mobile device and/or the second state corresponds to an open state of the mobile device.

10. The mobile device of any of claims 1 to 9, wherein the display portion is a flexible display.

11. The mobile device of any of claims 2 to 10, wherein the click hinge automatically rotates the second case from the first state to the second state, if a predetermined angle between the first case and second case is achieved, and/or from the second state to the first state, if a predetermined angle between the first case and second case is achieved.

## Patentansprüche

1. Mobile elektronische Vorrichtung (10), umfassend:
ein erstes Gehäuse (100) umfassend ein Langloch (120), ein erstes Ende und ein zweites Ende; und
ein zweites Gehäuse (200) umfassend ein Langloch (220), ein erstes Ende und ein zweites Ende,
wobei das zweite Gehäuse (200) dazu eingerichtet ist, von einem ersten Zustand zu einem zweiten Zustand zu rotieren,
wobei der erste Zustand als ein Zustand definiert ist, in dem die jeweiligen ersten Enden und zweiten Enden des ersten Gehäuses (100) und des zweiten Gehäuses (200) im Wesentlichen zueinander benachbart sind,
wobei der zweite Zustand als ein Zustand definiert ist, in dem die jeweiligen zweiten Enden des ersten Gehäuses (100) und des zweiten Gehäuses (200) im Wesentlichen zueinander benachbart sind und die jeweiligen ersten Enden des ersten Gehäuses (100) und des zweiten Gehäuses (200) sich voneinander weg erstrecken;
**dadurch gekennzeichnet, dass** die mobile elektronische Vorrichtung ferner umfasst:
einen Anzeigeabschnitt (300), der um eine Außenfläche des ersten Gehäuses (100) und des zweiten Gehäuses (200) gewickelt ist; und
einen Scharnierabschnitt (400), der an das zweite Ende des ersten Gehäuses (100) und das zweite Ende des zweiten Gehäuses (200) gekoppelt ist, wobei der Scharnierabschnitt (400) umfasst:
ein erstes Gelenk (410) und ein zweites Gelenk (420),
wobei das erste Gelenk (410) einen Befestigungsabschnitt (411), der in einer Befestigungsnut (110) des ersten Gehäuses (100) angeordnet ist, einen Erstreckungsabschnitt (412), der sich von dem Befestigungsabschnitt (411) erstreckt, und einen Bewegungsabschnitt (413), der mit dem Erstreckungsabschnitt (412) verbunden und in dem Langloch (220) des zweiten Gehäuses (200) angeordnet ist, umfasst
wobei der Befestigungsabschnitt (411) im Innern des ersten Gehäuses (100) festpositioniert ist, während er innerhalb des ersten Gehäuses (100) rotierbar ist, wenn der Schanierabschnitt (400) rotiert, wodurch die Rotation des Schanierabschnittes (400) aufrechterhalten wird, und der Erstreckungsabschnitt (412) den Befestigungsabschnitt (411) und den Bewegungsabschnitt (413) miteinander verbindet, während der Befestigungsabschnitt (411) und der Bewegungsabschnitt (413) in einem konstanten Abstand gehalten werden, so dass, wenn der Scharnierabschnitt (400) rotiert, der Bewegungsabschnitt (413) in der Lage ist, seine Position entlang des Langlochs (220) des zweiten Gehäuses (200) zu bewegen,
wobei das zweite Gelenk (420) einen Befestigungsabschnitt (421), der in einer Befestigungsnut (210) des zweiten Gehäuses (200) angeordnet ist, einen Erstreckungsabschnitt (422), der sich von dem Befestigungsabschnitt (421) erstreckt, und einen Bewegungsabschnitt (423), der mit dem Erstreckungsabschnitt (422) verbunden und in dem Langloch (120) des ersten Gehäuses (100) angeordnet ist, umfasst,
wobei der Befestigungsabschnitt (421) im Innern des zweiten Gehäuses (200) angeordnet ist, während er innerhalb des zweiten Gehäuses (200) rotierbar ist, wenn der Schanierabschnitt (400) rotiert, wodurch die Rotation des Schanierabschnittes (400) aufrechterhalten wird, und der Erstreckungsabschnitt (422) den Befestigungsabschnitt (421) und den Bewegungsabschnitt (423) in einem konstanten Abstand hält, so dass, wenn der Scharnierabschnitt (400) rotiert, der Bewegungsabschnitt (423) in der Lage ist, seine Position innerhalb des Langlochs und geführt von dem Langloch (120) des ersten Gehäuses (100) zu bewegen,
wobei das erste Gelenk (410) und das zweite Gelenk (420) an einer Schnittachse, die im Wesentlichen senkrecht zu den Langlöchern (120, 220) des ersten Gehäuses (100) und des zweiten Gehäuses (200) ist, gekoppelt sind,
wobei das zweite Gelenk (420) um die Schnittachse mit dem ersten Gelenk (410) derart verbunden ist, dass das erste Gelenk (410) und das zweite Gelenk (420) sich bewegen können, während sie miteinander verbunden bleiben, wodurch das erste Gehäuse (100) und das zweite Gehäuse (200) gestattet werden, relativ zueinander zu rotieren.

2. Mobile Vorrichtung nach Anspruch 1, wobei der Scharnierabschnitt ein Klick-Schanier umfasst.

3. Mobile Vorrichtung nach Anspruch 1 oder 2, wobei die jeweiligen zweiten Enden des ersten Gehäuses und des zweiten Gehäuses jeweils eine quadratförmige gekrümmte Fläche aufweisen.

4. Mobile Vorrichtung nach Anspruch 3, wobei eine Summe von Umfangslängen der gekrümmten Flächen des ersten Gehäuses und des zweiten Gehäuses in dem ersten Zustand im Wesentlichen gleich einem Abstand von einer Exzentrizität zwischen den gekrümmten Flächen des ersten Gehäuses und des zweiten Gehäuses in dem zweiten Zustand ist.

5. Mobile Vorrichtung nach Anspruch 3 oder 4, wobei der Anzeigeabschnitt die gekrümmten Flächen des ersten Gehäuses und des zweiten Gehäuses in dem ersten Zustand berührt und auf gleicher Höhe mit den gekrümmten Flächen in dem zweiten Zustand ist.

6. Mobile Vorrichtung nach einem der Ansprüche 1 bis 5, wobei das erste Gelenk und das zweite Gelenk aneinander an einem Schnittbereich der jeweiligen Erstreckungsabschnitte gekoppelt sind.

7. Mobile Vorrichtung nach einem der Ansprüche 1 bis 6, wobei die Langlöcher des ersten Gehäuses und des zweiten Gehäuses gleichlang sind.

8. Mobile Vorrichtung nach einem der Ansprüche 1 bis 7, wobei der Anzeigeabschnitt koplanar mit einer Fläche jeweils des ersten Gehäuses und des zweiten Gehäuses in dem zweiten Zustand ist.

9. Mobile Vorrichtung nach einem der Ansprüche 1 bis 8, wobei der erste Zustand einem geschlossenen Zustand der mobilen Vorrichtung entspricht oder/und der zweite Zustand einem geöffneten Zustand der mobilen Vorrichtung entspricht.

10. Mobile Vorrichtung nach einem der Ansprüche 1 bis 9, wobei der Anzeigeabschnitt eine flexible Anzeige ist.

11. Mobile Vorrichtung nach einem der Ansprüche 2 bis 10, wobei das Klick-Scharnier das zweite Gehäuse von dem ersten Zustand in den zweiten Zustand automatisch rotiert, wenn ein vorbestimmter Winkel zwischen dem ersten Gehäuse und dem zweiten Gehäuse erreicht wird, oder/und von dem zweiten Zustand in den ersten Zustand, wenn ein vorbestimmter Winkel zwischen dem ersten Gehäuse und dem zweiten Gehäuse erreicht wird.

## Revendications

1. Dispositif électronique mobile (10) comprenant:
un premier boîtier (100) comprenant une fente (120), une première extrémité et une deuxième extrémité; et
un deuxième boîtier (200) comprenant une fente (220), une première extrémité et une deuxième extrémité;
dans lequel le deuxième boîtier (200) est adapté pour tourner depuis un premier état vers un deuxième état,
le premier état étant défini comme un état dans lequel les premières extrémités et deuxièmes extrémités respectives du premier boîtier (100) et du deuxième boîtier (200) sont sensiblement adjacentes l'une à l'autre,
le deuxième état étant défini comme un état dans lequel les deuxièmes extrémités respectives du premier boîtier (100) et du deuxième boîtier (200) sont sensiblement adjacentes l'une à l'autre, et les premières extrémités respectives du premier boîtier (100) et du deuxième boîtier (200) sont écartées l'une de l'autre;
**caractérisé en ce que** le dispositif électronique mobile comprend en outre:
une partie écran (300) enveloppant une surface externe du premier boîtier (100) et du deuxième boîtier (200); et
une partie charnière (400) couplée à la deuxième extrémité du premier boîtier (100) et à la deuxième extrémité du deuxième boîtier (200), la partie charnière (400) comprenant:
une première liaison (410) et une deuxième liaison (420),
la première liaison (410) incluant une partie de fixation (411) positionnée dans une rainure de fixation (110) du premier boîtier (100), une partie d'extension (412) s'étendant depuis la partie de fixation (411) et une partie mobile (413) connectée à la partie d'extension (412) et positionnée dans la fente (220) du deuxième boîtier (200),
la partie de fixation (411) étant fixée en position à l'intérieur du premier boîtier (100), tout en pouvant tourner à l'intérieur du premier boîtier (100), lorsque la partie charnière (400) tourne, maintenant ainsi la rotation de la partie charnière (400), et la partie d'extension (412) connectant la partie de fixation (411) et la partie mobile (413) l'une à l'autre, tout en maintenant la partie de fixation (411) et la partie mobile (413) à une distance constante, de telle façon que, lorsque la partie charnière (400) tourne, la partie mobile (413) est capable de changer de position le long de la fente (220) du deuxième boîtier (200),
la deuxième liaison (420) incluant une partie de fixation (421) positionnée dans une rainure de fixation (210) du deuxième boîtier (200), une partie d'extension (422) s'étendant depuis la partie de fixation (421) et une partie mobile (423) connectée à la partie d'extension (422) et positionnée dans la fente (120) du premier boîtier (100), la partie de fixation (421) étant placée à l'intérieur du deuxième boîtier (200), tout en pouvant tourner à l'intérieur du deuxième boîtier (200), lorsque la partie charnière (400) tourne, maintenant ainsi la rotation de la partie charnière (400), et la partie d'extension (422) maintenant la partie de fixation (421) et la partie mobile (423) à une distance constante, de telle façon que, lorsque la partie charnière (400) tourne, la partie mobile (423) est capable de changer de position à l'intérieur de la fente (120) du premier boîtier (100) en étant guidée par celle-ci,
la première liaison (410) et la deuxième liaison (420) sont couplées à un axe d'intersection essentiellement perpendiculaire aux fentes (120, 220) du premier boîtier (100) et du deuxième boîtier (200),
la deuxième liaison (420) étant connectée à la première liaison (410) autour de l'axe d'intersection, de telle façon que la première liaison (410) et la deuxième liaison (420) peuvent se déplacer tout en restant reliées l'une à l'autre, permettant ce faisant au premier boîtier (100) et au deuxième boîtier (200) de tourner relativement l'un à l'autre.

2. Dispositif mobile suivant la revendication 1, dans lequel la partie charnière comprend une charnière à cliquet.

3. Dispositif mobile suivant la revendication 1 ou 2, dans lequel les deuxièmes extrémités respectives du premier boîtier et du deuxième boîtier ont chacune une surface incurvée en forme de quadrant.

4. Dispositif mobile suivant la revendication 3, dans lequel la somme des longueurs de périmètre des surfaces incurvées du premier boîtier et du deuxième boîtier dans le premier état est essentiellement égale à une distance d'excentricité entre les surfaces incurvées du premier et du deuxième boîtier dans le deuxième état.

5. Dispositif mobile suivant la revendication 3 ou 4, dans lequel la partie écran fait contact avec les surfaces incurvées du premier et du deuxième boîtiers dans le premier état et est à niveau avec les surfaces incurvées dans le deuxième état.

6. Dispositif mobile suivant l'une quelconque des revendications 1 à 5, dans lequel la première liaison et la deuxième liaison sont couplées l'une à l'autre à une surface d'intersection des parties d'extension respectives.

7. Dispositif mobile suivant l'une quelconque des revendications 1 à 6, dans lequel les fentes du premier boîtier et du deuxième boîtier sont de la même longueur.

8. Dispositif mobile suivant l'une quelconque des revendications 1 à 7, dans lequel la partie écran est coplanaire à une surface du premier boîtier et du deuxième boîtier dans le deuxième état.

9. Dispositif mobile suivant l'une quelconque des revendications 1 à 8, dans lequel le premier état correspond à un état fermé du dispositif mobile et/ou le deuxième état correspond à un état ouvert du dispositif mobile.

10. Dispositif mobile suivant l'une quelconque des revendications 1 à 9, dans lequel la partie écran est un écran flexible.

11. Dispositif mobile suivant l'une quelconque des revendications 2 à 10, dans lequel la charnière à cliquet fait tourner automatiquement le deuxième boîtier du premier état dans le deuxième état lorsqu'un angle prédéterminé entre le premier boîtier et le deuxième boîtier est atteint, et/ou du deuxième état dans le premier état lorsqu'un angle prédéterminé entre le premier boîtier et le deuxième boîtier est atteint.
